# EUROPÄISCHE PATENTSCHRIFT

(11) **EP 3 650 603 B1**
(45) Veröffentlichungstag und Bekanntmachung des Hinweises auf die Patenterteilung: **11.08.2021**
(21) Anmeldenummer: 18205641.6
(22) Anmeldetag: 12.11.2018
(51) Int. Cl.: E02D 3/12, E02D 5/46, E02D 17/02, E02D 19/12, E02D 27/50, E02D 31/12, C09K 17/12

(54) **VERFAHREN ZUM HERSTELLEN EINER ABDICHTSOHLE IM BODEN**
METHOD FOR PRODUCING A SEALED BASE IN THE FLOOR
PROCÉDÉ DE FABRICATION D'UN DALLAGE D'ÉTANCHÉITÉ DANS LE SOL

(43) Veröffentlichungstag der Anmeldung: 13.05.2020
(73) Patentinhaber: BAUER Spezialtiefbau GmbH, 86529 Schrobenhausen (DE)
(72) Erfinder: HARTMANN, Dominik, 85276 Pfaffenhofen (DE); HARTMANN, Albert, 84137 Vilsbiburg (DE)
(74) Vertreter: Wunderlich & Heim Patentanwälte Partnerschaftsgesellschaft mbB

(56) Entgegenhaltungen:
- EP-A1- 0 918 110
- EP-A1- 2 787 123
- DE-A1- 10 218 771
- DE-A1- 19 604 525
- DE-C1- 19 522 150

## Beschreibung

Die Erfindung betrifft ein Verfahren zum Herstellen einer Abdichtsohle im Boden, bei dem in einer ersten Bodenschicht mittels Injektion einer aushärtbaren Injektionsmasse eine Vielzahl von Dichtkörpern erstellt wird, welche aneinander angrenzen oder sich überschneiden, wobei die Vielzahl von Dichtkörpern nach Aushärten der Injektionsmasse eine feste Sohlplatte bilden, gemäß dem Oberbegriff des Anspruchs 1.

Die Erfindung betrifft weiterhin eine Abdichtsohle im Boden, wobei in einer ersten Bodenschicht eine Vielzahl von Dichtkörpern aus einer aushärtbaren Injektionsmasse erstellt sind, welche aneinander angrenzen oder sich überschneiden und dabei eine feste Sohlplatte bilden, gemäß dem Oberbegriff des Anspruchs 8.

Derartige Abdichtsohlen werden insbesondere bei der Abdichtung von tiefen Baugruben eingesetzt, welche eine Tiefe von 15 m und mehr aufweisen können. Wird eine solche Baugrube ausgehoben, steht häufig aufgrund des bestehenden Grundwasserspiegels an der Baugrubensohle ein relativ hoher Wasserdruck an. Durch eine Abdichtsohle ist sicherzustellen, dass einerseits kein Wasser in die Baugrube eindringen kann und andererseits die Baugrubensohle insgesamt nicht durch den anstehenden Wasserdruck nach oben gedrückt wird.

Aus den Dokumenten DE 197 52 180 C1 und DE 196 04 525 C2 ist es bekannt, eine feste Sohlplatte aus einer Vielzahl von Dichtkörpern aus einer aushärtbaren Injektionsmasse zu erstellen. Dabei werden in einem Düsenstrahlverfahren, auch HDI- Verfahren genannt, in einem vorgegebenen Raster in einer ersten Bodenschicht scheiben- oder kugelförmige Dichtkörper erstellt, welche aneinander angrenzen und so nach Aushärten der Injektionsmasse eine feste Sohlplatte bilden. Diese Sohlplatte kann über Ankerelemente in tieferliegenden Bodenschichten rückverankert werden, damit diese Sohlplatte dem anstehenden Grundwasserdruck standhält.

Derartige Abdichtsohlen werden auch als hochliegende Abdichtsohlen bezeichnet, da diese unmittelbar am Grund einer Baugrube ausgebildet werden können. Dies hat den Vorteil, dass anstehende Wände für eine Baugrubenumschließung nur eine Tiefe aufweisen müssen, welche etwa Tiefe der Baugrube entspricht.

Bei derartigen hochliegenden Abdichtsohlen mit einer festen Sohlplatte muss jedoch in einer grundsätzlich aufwendigen Weise eine ausreichende Dichtheit sichergestellt sein. Aus diesem Grund werden die Dichtkörper, welche die feste Sohlplatte bilden, mit einer gewissen Überschneidung ausgebildet. Je höher der Grad an Überschneidung ist, umso höher ist die Sicherheit gegen undichte Stellen. Allerdings bedeutet ein hoher Grad an Überschneidung auch einen erhöhten Arbeits- und Materialaufwand, was insbesondere bei großen Abdichtsohlen zu erheblichen Kostensteigerungen führt. Zudem kann auch die Anordnung von Rückverankerungselementen, welche die feste Sohlplatte durchdringen, ebenfalls ein Problem für die Dichtheit darstellen. So können zusätzliche Abdichtmaßnahmen im Bereich des Durchgangs der Rückverankerungselemente durch die Sohlplatte notwendig werden.

Weiterhin bestehen sogenannte tiefliegende Abdichtsohlen, bei welchen vor dem Ausheben einer Baugrube in einer tieferen Bodenschicht durch Injizieren eines Dichtgels eine horizontale dichte Bodenschicht erzeugt wird. Das Dichtgel verschließt etwa in einer Sand- oder Kiesschicht die Zwischenräume zwischen der Sand- oder Gesteinskörnung. Da eine solche durch Dichtgel erzeugte Abdichtsohle keine feste Sohlplatte bildet, welche nach unten rückverankert werden könnte, muss eine definierte Bodenschicht oberhalb dieser "weichen" Abdichtsohle verbleiben. Diese Auflast-Bodenschicht, welche eine Dicke von mehreren Metern haben kann, befindet sich somit zwischen der Abdichtsohle und dem Grund der auszuhebenden Baugrube, so wie dies etwa aus der DE 195 22 150 C1, der EP 2 787 123 B1 oder der DE 102 18 771 B4 bekannt ist.

Durch eine derartige tiefliegende Abdichtsohle kann eine gute Abdichtung erzielt werden. Nachteilig ist jedoch, dass die Wände der Baugrubenumschließung deutlich tiefer als die Baugrubentiefe ausgeführt werden müssen, so dass die Baugrubenumschließung bis zur tieffliegenden Abdichtsohle reicht. Die tieffliegenden Abdichtsohlen mit einem Dichtgel sind daher mit einem erheblich höheren Aufwand zur Erstellung der Wände für eine Baugrubenumschließung verbunden.

Der Erfindung liegt die **Aufgabe** zugrunde, ein Verfahren zum Herstellen einer Abdichtsohle im Boden und eine Abdichtsohle anzugeben, mit welchen sowohl eine gute Abdichtung als auch eine effiziente Herstellung ermöglicht werden.

Die Aufgabe wird nach der Erfindung durch ein Verfahren mit dem Merkmal des Anspruchs 1 beziehungsweise mit einer Abdichtsohle mit den Merkmalen des Anspruchs 8 gelöst. Bevorzugte Ausführungsformen der Erfindung sind in den abhängigen Ansprüchen angegeben.

Das erfindungsgemäße Verfahren ist dadurch gekennzeichnet, dass in einer zweiten Bodenschicht, welche unterhalb der ersten Bodenschicht für die feste Sohlplatte liegt, mittels Injektion eines Dichtgels eine Gelsohle erstellt wird, und dass die feste Sohlplatte und die darunterliegende Gelsohle die Abdichtsohle bilden.

Eine Grundidee der Erfindung liegt darin, eine feste Sohlplatte einer hochliegenden Absichtssohle mit einer Gelsohle einer tiefliegenden Absichtssohle zu kombinieren. Durch die feste Sohlplatte kann die erfindungsgemäße Abdichtsohle als eine hochliegende Abdichtsohle erstellt werden, welche ohne oder mit einer relativ geringen Auflast ausgebildet werden kann. Vorzugsweise bildet die feste Sohlplatte unmittelbar den Grund einer zu erstellenden Baugrube.

Durch die Anordnung einer Gelsohle unterhalb der Sohlplatte wird eine hohe Dichtheit der erfindungsgemäßen Abdichtsohle erreicht. Hierdurch können die zum Erstellen der festen Sohlplatte notwendigen Dichtkörper mit einer relativ geringen oder idealerweise keiner Überschneidung ausgebildet werden. Die sich dabei ergebenden möglichen Zwischenräume, welche sich durch Schwankungen beim Herstellen der Dichtkörper ergeben können, werden durch die darunterliegende Gelsohle zuverlässig gegen einen Durchtritt von Wasser abgedichtet. Zugleich kann die feste Sohlplatte eine hinreichende Stabilität gegen ein Nachobendrücken der Sohle der Baugrube gewährleisten. Gemäß der Erfindung kann die Dichtsohle unmittelbar unter der festen Sohlplatte angeordnet sein und an diese angrenzen oder mit einem gewissen Zwischenabstand ausgebildet sein, so dass sich noch Bodenmaterial zwischen der Unterseite der Sohlplatte und der Oberseite der Gelsohle befindet.

Im Ergebnis kann durch die erfindungsgemäß erstellte Abdichtsohle der Vorteil einer hochliegenden Abdichtsohle bei einem verringerten Aufwand beim Erstellen der Dichtkörper bei gleichzeitig hoher Dichtheit durch die darunterliegende Gelsohle erzielt werden.

Besonders bevorzugt ist es nach einer Weiterbildung der Erfindung, dass die Sohlplatte mittels Rückverankerungsmitteln in darunterliegenden Bodenschichten verankert wird. Die Rückverankerungsmittel können insbesondere Zuganker oder Zugpfähle sein, welche in geeigneter Weise mit der festen Sohlplatte verbunden sind. In ihrem unteren Bereich können die Verankerungsmittel, beispielsweise als HDI-Anker ausgebildet sein, welche mit den darunterliegenden Bodenschichten verbunden sind. So können über die Verankerungsmittel Auftriebskräfte an der Abdichtsohle in darunterliegende Bodenschichten abgeleitet werden.

Grundsätzlich können die Gelsohle und die Sohlplatte in zeitlicher Hinsicht in beliebiger Weise erstellt werden. So kann die Sohlplatte zuerst oder gleichzeitig mit der Gelsohle erstellt werden. Aus fertigungstechnischer Sicht ist es jedoch besonders vorteilhaft, dass zuerst die Gelsohle und dann die Sohlplatte erstellt wird. Die Gelsohle und die Sohlplatte können dabei mit der gleichen Injektionseinrichtung, insbesondere einer abbohrbaren Injektionslanze, oder mit getrennten Injektionseinrichtungen erstellt werden.

Zum Erstellen der festen Sohlplatte kann grundsätzlich jede geeignete aushärtbare Masse eingesetzt werden. Besonders zweckmäßig ist es nach einer Weiterbildung der Erfindung, dass als aushärtbare Masse eine zementhaltige Suspension, insbesondere eine Zement-Bentonit-Suspension verwendet wird. Eine derartige Suspension lässt sich mit einem Düseninjektionsverfahren, bei welchem eine Injektionslanze rotierend in einer Bodenschicht bewegt wird, besonders effizient einbringen. Die Zugabe eines Bentonitanteiles führt auch zu einem erhöhten Grad an Dichtheit der festen Sohlplatte.

Eine weitere bevorzugte Ausführungsvariante der Erfindung besteht darin, dass die aushärtbare Injektionsmasse und/oder das Dichtgel mittels einer Injektionslanze eingespritzt werden, welche bis zu der vorgegebenen Bodenschicht in den Boden eingebracht wird. Das Einbringen kann insbesondere durch ein Bohren erfolgen. Für das Einbringen kann insbesondere ein Hochdruckinjektionsverfahren eingesetzt werden, bei welchem die zu injizierende Suspension mit Drücken von 20 bar und höher eingespritzt werden.

Besonders bevorzugt ist es weiterhin, dass das Dichtgel als Komponenten Silikat, Wasserglas und/oder Kieselsol enthält. Besonders bevorzugt besteht das Injektionsmedium dabei aus bis 80 % Wasser, 10 % Wasserglas, 10 bis 30 % Kieselsol und 0,1 bis 3 % Komplexbildner. Die Prozentzahlen beziehen sich dabei auf Gewichtsprozent. Unter Kieselsol kann insbesondere eine wässrige Lösung kolloidaler Silikate verstanden werden. Besonders vorteilhaft ist es insbesondere, wenn die Gelsohle mit einem neutralen pH-Wert oder einem pH-Wert erstellt wird, welcher weitgehend dem pH-Wert der umgebenden Bodenschicht entspricht. Zum Erstellen der Gelsohle nach der Erfindung können jedoch auch entsprechend andere geeignete Dichtgele eingesetzt werden.

Grundsätzlich kann bei entsprechenden Gegebenheiten allein eine Dichtsohle ohne die Erstellung einer Baugrubenumschließung hergestellt werden, etwa wenn angrenzende Felsbereiche bestehen. Besonders zweckmäßig ist es nach einer Weiterbildung der Erfindung, dass zum Bilden einer Baugrubenumschließung eine vertikale Umschließungswand erstellt wird, an welche die Dichtsohle angrenzt. Die Dichtsohle liegt dabei vorzugsweise innerhalb der Umschließungswand.

Die Umschließungswand kann aus Bohrpfahlwänden, Schlitzwänden oder auch durch entsprechende Spundwandbohlen gebildet werden. Gemäß der Erfindung werden dabei in der Regel zunächst die Abdichtsohle und dann die Umschließungswände für die Baugrubenumschließung erstellt. Anschließend kann die Baugrube bis zu der vorgesehenen Baugrubensohle, insbesondere bis zur festen Sohlplatte, ausgehoben werden.

Die erfindungsgemäße Abdichtsohle ist dadurch gekennzeichnet, dass in einer zweiten Bodenschicht, welche unterhalb der ersten Bodenschicht für die feste Sohlplatte liegt, eine Gelsohle mit einem Dichtgel erstellt ist, und dass die feste Sohlplatte und die darunterliegende Gelsohle die Abdichtsohle bilden.

Die erfindungsgemäße Dichtsohle ist insbesondere mit einem erfindungsgemäßen Verfahren, wie es zuvor beschrieben wurde, hergestellt. Mit der erfindungsgemäßen Abdichtsohle ergeben sich die Vorteile, wie sie zuvor im Zusammenhang mit dem erfindungsgemäßen Herstellungsverfahren beschrieben wurden.

Besonders vorteilhaft ist es nach einer Weiterbildung der Erfindung, dass die Sohlplatte mittels Rückverankerungsmitteln in darunterliegenden Bodenschichten verankert ist. Die Rückverankerungsmittel können vorzugsweise Zuganker oder zu Zugpfähle sein.

Weiterhin umfasst die Erfindung eine Baugrubenumschließung mit einer etwa vertikalen Umschließungswand, wobei innerhalb der Umschließungswand eine erfindungsgemäße Abdichtsohle ausgebildet ist.

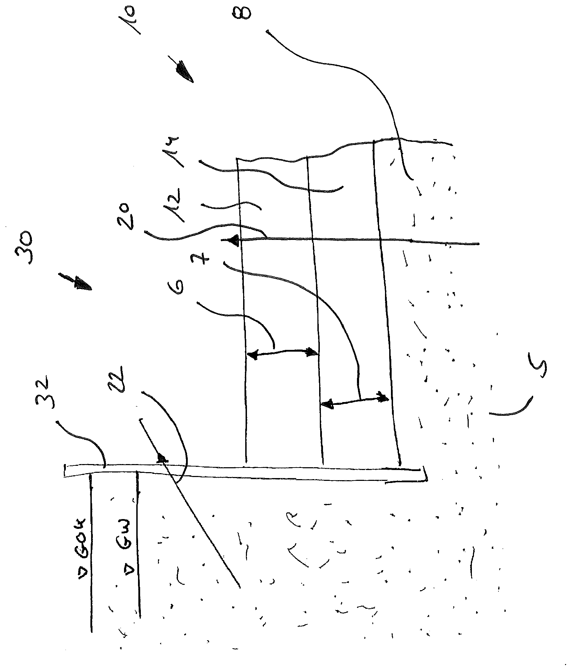

Die Erfindung wird nachfolgend anhand eines bevorzugten Ausführungsbeispiels weiter erläutert, welches schematisch in der einzigen Zeichnung dargestellt ist.

In der Teilquerschnittsansicht der einzigen Zeichnung ist in einem Boden 5 eine Baugrubenumschließung 30 mit einer vertikalen Umschließungswand 32 und einer erfindungsgemäßen Abdichtsohle 10 ausgebildet. Der Boden weist dabei eine Geländeoberkante GOK und einen Grundwasserspiegel GW auf.

Vor dem Ausheben der Baugrube wird dabei zunächst in einer ersten Bodenschicht 6 eine im Wesentlichen horizontale Sohlplatte 12 durch Injizieren einer aushärtbaren Masse erstellt. Dabei werden in einem vorgegebenen Raster Bohrungen bis in die erste Bodenschicht 6 hinein erbracht, wobei dann mittels von nicht dargestellten Injektionslanzen eine aushärtbare Masse zum Erzeugen eines scheibenförmigen Dichtkörpers um die etwa vertikale Injektionsbohrung herum erzeugt wird. Der Durchmesser des scheibenartigen Dichtkörpers ist dabei so auf das Raster abgestellt, dass sich die einzelnen Dichtkörper kontaktieren und insbesondere definiert überschneiden. Die Injektionsmasse härtet dabei nach einer bestimmten Zeit aus, so dass eine insgesamt feste Sohlplatte 12 erstellt wird, welche auch als eine statische Sohle bezeichnet werden kann.

Anschließend oder vorausgehend kann in einer zweiten Bodenschicht 7, welche unterhalb der ersten Bodenschicht 6 liegt, in entsprechender Weise mit Injektionslanzen eine Gelsohle 14 durch Injizieren eines Dichtgels erstellt werden. Das fließfähige Dichtgel kann dabei in die Zwischenräume der Gesteinskörnung in der zweiten Bodenschicht 7 eindringen und sich dann zu einer gelartigen Struktur verändern. Hierdurch wird die zweite Bodenschicht 7 zu einer flüssigkeitssperrenden Schicht gemacht und kann so die Gelsohle 14 darstellen. Die Gelsohle 14 kann auch als eigentlich dichtende Sohle bezeichnet werden.

Die so hergestellte feste Sohlplatte 12 mit der darunterliegenden weichen Gelsohle 14 bildet die erfindungsgemäße Abdichtsohle 10, welche somit eine Kombination von zwei Sohlen darstellt.

Die feste Sohlplatte 12 kann im Bedarfsfall durch Rückverankerungsmittel 20, insbesondere Zugpfähle oder Zuganker, in darunterliegenden Bodenschichten 8 verankert werden, welche unterhalb der ersten Bodenschicht 6 und der zweiten Bodenschicht 7 liegen.

Nach Erstellung der erfindungsgemäßen Abdichtsohle 10 können zum Bilden einer vertikalen Umschließungswand 32 entsprechende Wandelemente in dem Boden erstellt werden. Die Umschließungswand 32 ist insbesondere ringförmig um die Abdichtsohle 10 herum geschlossen. Die ringförmige, etwa vertikale Umschließungswand 32 und die hieran angrenzende etwa horizontale Abdichtsohle 10 bilden eine Baugrubenumschließung 30. Nach Fertigstellung der Baugrubenumschließung 30 kann das Bodenmaterial innerhalb der Umschließungswand 32 zum Erstellen einer Baugrube bis zur Oberseite der Sohlplatte 12 ausgehoben werden.

## Patentansprüche

1. Verfahren zum Herstellen einer Abdichtsohle (10) im Boden (5),
bei dem in einer ersten Bodenschicht (6) mittels Injektion einer aushärtbaren Injektionsmasse eine Vielzahl von Dichtkörpern erstellt wird, welche aneinander angrenzen oder sich überschneiden, wobei die Vielzahl von Dichtkörpern nach Aushärten der Injektionsmasse eine feste Sohlplatte (12) bilden, **dadurch gekennzeichnet,**
**dass** in einer zweiten Bodenschicht (7), welche unterhalb der ersten Bodenschicht (6) für die feste Sohlplatte (12) liegt, mittels Injektion eines Dichtgels eine Gelsohle (14) erstellt wird, und
**dass** die feste Sohlplatte (12) und die darunterliegende Gelsohle (14) die Abdichtsohle (10) bilden.

2. Verfahren nach Anspruch 1,
**dadurch gekennzeichnet,**
**dass** die Sohlplatte (12) mittels Rückverankerungsmitteln (20) in darunterliegenden Bodenschichten (8) verankert wird.

3. Verfahren nach Anspruch 1 oder 2,
**dadurch gekennzeichnet,**
**dass** zuerst die Gelsohle (14) und dann die Sohlplatte (12) erstellt wird.

4. Verfahren nach einem der Ansprüche 1 bis 3,
**dadurch gekennzeichnet,**
**dass** als aushärtbare Masse eine zementhaltige Suspension, insbesondere eine Zement-Bentonit-Suspension verwendet wird.

5. Verfahren nach einem der Ansprüche 1 bis 4,
**dadurch gekennzeichnet,**
**dass** die aushärtbare Injektionsmasse und/oder das Dichtgel mittels einer Injektionslanze eingespritzt werden, welche bis zu der vorgesehenen Bodenschicht (6, 7) in den Boden (5) eingebracht wird.

6. Verfahren nach einem der Ansprüche 1 bis 5,
**dadurch gekennzeichnet,**
**dass** das Dichtgel als Komponenten Silikat, Wasserglas und/oder Kieselsol enthält.

7. Verfahren nach einem der Ansprüche 1 bis 6,
**dadurch gekennzeichnet,**
**dass** zum Bilden einer Baugrubenumschließung (30) eine etwa vertikale Umschließungswand (32) erstellt wird, an welche die Abdichtsohle (20) angrenzt.

8. Abdichtsohle im Boden,
wobei in einer ersten Bodenschicht (6) eine Vielzahl von Dichtkörpern aus einer aushärtbaren Injektionsmasse erstellt sind, welche aneinander angrenzen oder sich überschneiden und dabei eine feste Sohlplatte (12) bilden,
**dadurch gekennzeichnet,**
**dass** in einer zweiten Bodenschicht (7), welche unterhalb der ersten Bodenschicht (6) für die feste Sohlplatte (12) liegt, eine Gelsohle mit einem Dichtgel erstellt ist, und
**dass** die feste Sohlplatte (12) und die darunterliegende Gelsohle (14) die Abdichtsohle (10) bilden.

9. Abdichtsohle nach Anspruch 8,
**dadurch gekennzeichnet,**
**dass** die Sohlplatte (12) mittels Rückverankerungsmitteln (20) in darunterliegenden Bodenschichten (8) verankert ist.

10. Baugrubenumschließung mit einer etwa vertikalen Umschließungswand (32),
**dadurch gekennzeichnet,**
**dass** innerhalb der Umschließungswand (32) eine Abdichtsohle (10) nach Anspruch 8 oder 9 ausgebildet ist.

## Claims

1. Method for producing a sealing base (10) in the ground (5),
in which by injection of a curable grouting compound a plurality of sealing elements is produced in a first soil layer (6), which elements adjoin one another or overlap, wherein the plurality of sealing elements forms a solid base plate (12) following curing of the grouting compound,
**characterized in that**
in a second soil layer (7), which lies beneath the first soil layer (6) for the solid base plate (12), a gel base (14) is created by means of injection of a sealing gel, and
that the solid base plate (12) and the underlying gel base (14) form the sealing base (10).

2. Method according to claim 1,
**characterized in that**
the base plate (12) is anchored in underlying soil layers (8) by anchoring means (20).

3. Method according to claim 1 or 2,
**characterized in that**
first the gel base (14) and then the base plate (12) is created.

4. Method according to one of claims 1 to 3,
**characterized in that**
a suspension containing cement, in particular a cement-bentonite suspension, is used as a curable compound.

5. Method according to one of claims 1 to 4,
**characterized in that**
the curable grouting compound and/or the sealing gel are injected by means of a grouting lance, which is introduced into the ground (5) as far as the envisaged soil layer (6, 7).

6. Method according to one of claims 1 to 5,
**characterized in that**
the sealing gel contains silicate, water glass and/or silica sol as components.

7. Method according to one of claims 1 to 6,
**characterized in that**
to form an excavation pit enclosure (30), an approximately vertical enclosure wall (32) is created, at which the sealing base (10) adjoins.

8. Sealing base in the ground,
wherein in a first soil layer (6) a plurality of sealing elements made from a curable grouting compound is created, which elements adjoin one another or overlap and form a solid base plate (12) thereby,
**characterized in that**
in a second soil layer (7), which lies beneath the first soil layer (6) for the solid base plate (12), a gel base is created using a sealing gel, and
that the solid base plate (12) and the underlying gel base (14) form the sealing base (10).

9. Sealing base according to claim 8,
**characterized in that**
the base plate (12) is anchored in underlying soil layers (8) by anchoring means (20).

10. Excavation pit enclosure with an approximately vertical enclosure wall (32),
**characterized in that**
inside the enclosure wall (32) there is formed a sealing base (10) according to claim 8 or 9.

## Revendications

1. Procédé de fabrication d'une semelle d'étanchéité (10) dans le sol (5),
où est produite, dans une première couche de sol (6), au moyen de l'injection d'une masse d'injection durcissable, une pluralité de corps étanches, lesquels sont contigus ou se chevauchent, dans lequel la pluralité de corps étanches forme une dalle de semelle solide (12) après le durcissement de la masse d'injection,
**caractérisé en ce**
**qu'**est produite, dans une deuxième couche de sol (7), laquelle se situe sous la première couche de sol (6) pour la dalle de semelle solide (12), une semelle en gel (14) au moyen de l'injection d'un gel étanche, et
**que** la dalle de semelle solide (12) et la semelle en gel (14) située en dessous forment la semelle d'étanchéité (10).

2. Procédé selon la revendication 1,
**caractérisé en ce**
**que** la dalle de semelle (12) est ancrée dans des couches de sol (8) situées en dessous au moyen de moyens d'ancrage arrière (20).

3. Procédé selon la revendication 1 ou 2,
**caractérisé en ce**
**que** d'abord la semelle en gel (14) puis la dalle de semelle (12) sont produites.

4. Procédé selon l'une quelconque des revendications 1 à 3,
**caractérisé en ce**
**qu'**une suspension contenant du ciment, en particulier une suspension à base de ciment-bentonite, est utilisée en tant que masse durcissable.

5. Procédé selon l'une quelconque des revendications 1 à 4,
**caractérisé en ce**
**que** la masse d'injection durcissable et/ou le gel étanche sont injectés au moyen d'une lance d'injection, laquelle est introduite dans le sol (5) jusqu'à la couche de sol (6, 7) prévue.

6. Procédé selon l'une quelconque des revendications 1 à 5,
**caractérisé en ce**
**que** le gel étanche contient en tant que composants du silicate, du verre soluble et/ou du sol de silice.

7. Procédé selon l'une quelconque des revendications 1 à 6,
**caractérisé en ce**
**qu'**est produite pour former une enceinte pour trou de fondation (30) une paroi d'enceinte (32) à peu près verticale, à laquelle la semelle d'étanchéité (20) est contiguë.

8. Semelle d'étanchéité dans le sol,
dans laquelle est produite, dans une première couche de sol (6), une pluralité de corps étanches à partir d'une masse d'injection durcissable, lesquels sont contigus ou se chevauchent et forment ce faisant une dalle de semelle solide (12),
**caractérisée en ce**
**qu'**est produite, dans une deuxième couche de sol (7), laquelle se situe sous la première couche de sol (6) pour la dalle de semelle solide (12), une semelle en gel avec un gel étanche, et
**que** la dalle de semelle solide (12) et la semelle en gel (14) située en dessous forment la semelle d'étanchéité (10).

9. Semelle d'étanchéité selon la revendication 8,
**caractérisée en ce**
**que** la dalle de semelle (12) est ancrée dans des couches de sol (8) situées en dessous au moyen de moyens d'ancrage arrière (20).

10. Enceinte pour trou de fondation avec une paroi d'enceinte (32) à peu près verticale,
**caractérisée en ce**
**qu'**une semelle d'étanchéité (10) selon la revendication 8 ou 9 est réalisée à l'intérieur de la paroi d'enceinte (32).
